Europäisches Patentamt

European Patent Office

Office européen des brevets

(11) Veröffentlichungsnummer: **0 117 996**
**B1**

(12) **EUROPÄISCHE PATENTSCHRIFT**

(45) Veröffentlichungstag der Patentschrift:
06.08.86

(51) Int. Cl.⁴: **A 47 L 9/24**, F 16 L 11/12

(21) Anmeldenummer: **84100671.1**

(22) Anmeldetag: **23.01.84**

(54) Staubsaugerschlauch.

(30) Priorität: **31.01.83 DE 3303181**

(43) Veröffentlichungstag der Anmeldung:
**12.09.84 Patentblatt 84/37**

(45) Bekanntmachung des Hinweises auf die Patenterteilung:
**06.08.86 Patentblatt 86/32**

(84) Benannte Vertragsstaaten:
**FR GB IT SE**

(56) Entgegenhaltungen:
**DE - B - 2 401 037**
**FR - A - 2 260 739**
**FR - A - 2 309 190**
**US - A - 4 132 576**

(73) Patentinhaber: **Siemens Aktiengesellschaft Berlin und München, Wittelsbacherplatz 2, D-8000 München 2 (DE)**
Patentinhaber: **Techno-Chemie Kessler & Co. GmbH, Dieselstrasse 4, D-6367 Karben 1 (DE)**

(72) Erfinder: **Fleischer, Wolfgang, Dipl.-Ing., Am Heerweg 139, D-8731 Elfershausen 2 (DE)**
Erfinder: **Eichelberger, Leo, Friedrich-Ebert-Strasse 73, D-6090 Rüsselsheim (DE)**
Erfinder: **Endress, Georg, Kehreinstrasse 8, D-6230 Frankfurt/Nied (DE)**

(74) Vertreter: **Mehl, Ernst, Dipl.-Ing. et al, Postfach 22 01 76, D-8000 München 22 (DE)**

ACTORUM AG

## Beschreibung

Die Erfindung betrifft einen Staubsaugerschlauch, dessen Mantel eine nach aussen offene, parallel zur Längsachse des Staubsaugerschlauches verlaufende Nut aufweist, in welcher ein eine elektrische Leitung aufnehmender Zusatzschlauch angeordnet ist.

Ein solcher Staubsaugerschlauch ist durch die DE-A-3 044 068 bekannt. Wie in dieser Offenlegungsschrift beschrieben wird, kann sowohl der Staubsaugerschlauch als auch der Zusatzschlauch glatte Wandungen haben oder einer der beiden Schläuche glatte und der andere gewellte oder schliesslich beide Schläuche gewellte Wandungen besitzen. Es hat sich gezeigt, dass bei Verwendung eines glatten Zusatzschlauches in einer Achse eine merkliche Versteifung auftritt, da der Zusatzschlauch nur mit seiner Eigendehnung zur Biegemöglichkeit beiträgt. Beim Biegen über den Scheitel ergibt sich daher eine deutliche Versteifung.

Der Erfindung liegt die Aufgabe zugrunde, einen Staubsaugerschlauch der eingangs beschriebenen Art so weiterzubilden, dass in keiner Richtung eine Versteifung des Staubsaugerschlauches auftritt.

Die Lösung der gestellten Auflage gelingt durch die im Kennzeichen des Patentanspruchs 1 angegebenen Merkmale. Der Zusatzschlauch setzt somit durch ein Aufweiten der vorgesehenen Unterbrechungen einer Biegung des Staubsaugerschlauches nur noch einen geringen Widerstand entgegen.

Dadurch, dass die Wand des Zusatzschlauches mit radialen Einschnitten versehen ist, weist dieser Zusatzschlauch eine hohe Elastizität auf. Ausserdem lässt sich ein solcher Zusatzschlauch besonders einfach herstellen.

Weitere vorteilhafte Merkmale des Anmeldungsgegenstandes ergeben sich aus übrigen Unteransprüchen.

Anhand dreier in der Zeichnung dargestellter Ausführungsbeispiele wird der erfindungsgemässe Staubsaugerschlauch nachfolgend näher beschrieben. Es zeigt

Fig. 1 einen Staubsaugerschlauch mit einem als offene Wendel ausgebildeten Zusatzschlauch,

Fig. 2 einen Staubsaugerschlauch, bei dem der Zusatzschlauch mit radialen Einschnitten versehen ist und

Fig. 3 einen Staubsaugerschlauch, bei dem der Zusatzschlauch segmentartige Einschnitte aufweist.

Mit 1 ist ein Staubsaugerschlauch bezeichnet, an dessen Mantel eine nach aussen offene, sich in Längsrichtung parallel zur Achse des Staubsaugerschlauches erstreckende Nut 2 ausgebildet ist. In dieser Nut 2 ist ein Zusatzschlauch 3 eingelegt und an dem Staubsaugerschlauch 1 befestigt.

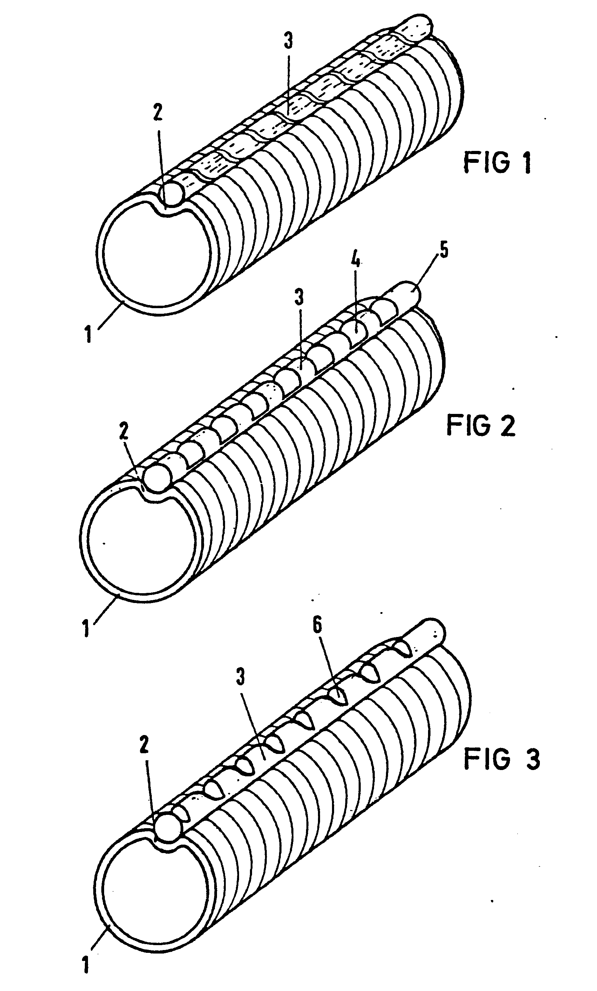

Entsprechend der Darstellung in Fig. 1 ist der Zusatzschlauch 3 als offene Wendel ausgebildet.

Bei der in Fig. 2 dargestellten Ausführungsform ist die Wand des Zusatzsclauches 3 mit radialen Einschnitten 4 versehen. Diese Einschnitte 4 liegen zwischen zylindrischen Abschnitten 5 des Zusatzschlauches 3. Durch die radialen Einschnitte 4 wird die Biegesteifigkeit des Zusatzschlauches besonders stark herabgesetzt. Ein solcher Zusatzschlauch lässt sich besonders leicht biegen, insbesondere wenn die Einschnitte 4 sehr tief ausgeführt sind, so dass nur noch ein schmaler Verbindungsstreifen zwischen den zylindrischen Abschnitten 5 besteht.

Die Ausführungsform nach Fig. 3 zeigt einen Staubsaugerschlauch, bei dem an dem Zusatzschlauch 3 segmentartige Einschnitte 6 vorgesehen sind.

## Patentansprüche

1. Staubsaugerschlauch, dessen Mantel eine nach aussen offene, parallel zur Längsachse des Staubsaugerschlauches verlaufende Nut (2) aufweist, in welcher ein eine elektrische Leitung aufnehmender Zusatzschlauch (3) angeordnet ist, dadurch gekennzeichnet, dass die Wand des Zusatzschlauches (3) über seine gesamte Länge mit in regelmässigen Abständen vorgesehenen Unterbrechungen versehen ist, so dass der Zusatzschlauch einer Biegung des Staubsaugerschlauches einen möglichst geringen Widerstand entgegensetzt.

2. Staubsaugerschlauch nach Anspruch 1, dadurch gekennzeichnet, dass die Wand des Zusatzschlauches (3) als offene Wendel ausgebildet ist.

3. Staubsaugerschlauch nach Anspruch 1, dadurch gekennzeichnet, dass die Wand des Zusatzschlauches (3) mit radialen Einschnitten (4) versehen ist.

4. Staubsaugerschlauch nach Anspruch 3, dadurch gekennzeichnet, dass die Einschnitte (4) zwischen zylindrischen Abschnitten des Zusatzschlauches (3) liegen.

5. Staubsaugerschlauch nach Anspruch 3, dadurch gekennzeichnet, dass die Einschnitte (6) segmentartig ausgebildet sind.

## Claims

1. A vacuum cleaner hose, the sheath of which has an outwardly open groove (2) which extends parallel to the longitudinal axis of the vacuum cleaner hose and in which is arranged an auxiliary hose (3) which houses an electric lead, characterised in that the wall of the auxiliary hose (3) is provided with interruptions at regular intervals over its entire length, so that the auxiliary hose offers as small a resistance as possible to bending of the vacuum cleaner hose.

2. A vacuum cleaner hose as claimed in Claim 1, characterised in that the wall of the auxiliary hose (3) is formed as an open spiral.

3. A vacuum cleaner hose as claimed in Claim 1, characterised in that the wall of the auxiliary hose (3) is provided with radial notches (4).

4. A vacuum cleaner hose as claimed in Claim 3, characterised in that the notches (4) are arranged between cylindrical sections of the auxiliary hose (3).

5. A vacuum cleaner hose as claimed in Claim 3, characterised in that the recesses (6) are of segmental shape.

**Revendications**

1. Tuyau d'aspirateur, dont la face latérale présente une gorge (2) qui est ouverte vers l'extérieur, qui s'étend parallèlement à l'axe longitudinal du tuyau d'aspirateur et dans laquelle est disposé un tuyau supplémentaire (3) recevant un conducteur électrique, caractérisé en ce que la paroi du tuyau supplémentaire (3) est munie, sur toute sa longueur, d'interruptions prévues à intervalles réguliers de sorte que le tuyau supplémentaire oppose une résistance aussi faible que possible à une flexion du tuyau d'aspirateur.

2. Tuyau d'aspirateur suivant la revendication 1, caractérisé en ce que la paroi du tuyau supplémentaire (3) est agencée en hélice ouverte.

3. Tuyau d'aspirateur suivant la revendication 1, caractérisé en ce que la paroi du tuyau supplémentaire (3) est munie d'entailles (4) radiales.

4. Tuyau d'aspirateur suivant la revendication 3, caractérisé en ce que les entailles (4) sont disposées entre deux tronçons cylindriques du tuyau supplémentaire (3).

5. Tuyau d'aspirateur suivant la revendication 3, caractérisé en ce que les entailles (6) sont constituées en forme de segments de cercle.

FIG 1

FIG 2

FIG 3